# EUROPEAN PATENT SPECIFICATION

(11) **EP 1 260 562 B1**
(45) Date of publication and mention of the grant of the patent: **02.04.2008**
(21) Application number: 02077149.9
(22) Date of filing: 13.05.2002
(51) Int. Cl.: C09D 11/00

(54) **Method for manufacturing pellets of hot-melt ink**
Verfahren zur Herstellung von Pellets für heissschmelzbare Tinte
Procédé de fabrication de pastilles d'encre thermo-fusibles

(30) Priority: 21.05.2001 EP 01201893
(43) Date of publication of application: 27.11.2002
(73) Proprietor: Océ-Technologies B.V., 5914 CC Venlo (NL)
(72) Inventor: Ogrinc, Hendrik J.A., 5941 JK Velden (NL); Schreurs, Wilhelmus A. M., 5935 BA Tegelen (NL)
(74) Representative: Vanoppen, Ronny R.J.

(56) References cited:
- EP-A- 1 067 157
- EP-A- 1 236 577
- US-A- 4 684 956
- US-A- 4 723 135
- PATENT ABSTRACTS OF JAPAN vol. 012, no. 139 (C-491), 27 April 1988 (1988-04-27) & JP 62 256879 A (TOKYO ELECTRIC CO LTD), 9 November 1987 (1987-11-09)

## Description

The invention relates to a method of manufacturing pellets of hot-melt ink.

Certain types of inkjet printers employ a so-called hot-melt ink i.e. a wax-like ink material that is solid at room temperature and has a melting point in the order of 100 or 120°C, for example. In the printhead of the printer, the ink is heated above it's melting point, so that droplets of liquid ink can be expelled through the nozzles of the printhead. In order to obtain a high quality of the printed image, the viscosity and hence the temperature of the molten ink in the printhead should be kept essentially constant. However, since the ink is consumed in the course of the printing process, and the ink reservoir accommodating the liquid ink within the printhead is only of a limited size, it is necessary to supply and melt solid ink while the printer is operating, and the latent heat required for melting the ink tends to decrease the temperature in the ink reservoir. For this reason, it is desirable that the amount of solid ink supplied to the ink reservoir can precisely be controlled an metered, and, to this end, it is advantageous that the ink is supplied in the form of pellets having a predetermined size and shape, e.g. in the form of small spherical pills.

Since the hot-melt ink is a thermoplastic material, the pellets having the desired shape and size can be manufactured by means of a molding process similar to injection molding processes known for manufacturing articles from thermoplastic resin. The molding process should however be adapted to the specific properties of hot melt ink which are in certain respects different from those of thermoplastic synthetic resin. Since the amount of shrinkage, which the hot-melt ink experiences when it is solidified, is comparatively low, and since a certain shrinkage can be tolerated because the final appearance of molded ink pellets is not critical, it is not necessary to apply high locking forces for keeping the mold closed during the molding process. On the other hand, since the hot-melt ink has a relatively low melting point, it tends to solidify immediately when it comes into contact with the walls of the mold cavity. This effect and the fact that the surface of the ink pellet is somewhat tacky even when the temperature has dropped below the melting point, increases the tendency of the pellet to adhere to walls of the mold cavity. This makes it more difficult to reliably and reproducingly remove the molded pellet from the molding die.

From EP 1 236 577 A1, a method for manufacturing pellets of hot-melt ink is known that has the following steps: molten ink is filled into a molding cavity defined between a first die and a second die of a mold: the ink is allowed to cool down and to solidify in the mold cavity. Because the pellets have the tendency to adhere to the walls of the mold cavity, then, to release the ink pellets from the mold, at least one of the first and second dies is heated for re-melting only the surface of the ink pellet to be removed from the mold cavity. This extra step allows the ink pellets to be removed from the mold in a well-defined way.

It is well-known that the removal of a molded product from a die can be facilitated by employing a separating agent which reduces the adherence between the molded product and the walls of the mold cavity. Then, however, a portion of the separating agent will inevitably be dispersed or diluted in the molten material, and this is not acceptable in the case of hot-melt ink, because it would deteriorate the quality of the ink. For example, even minute particles of the separating agent, when dispersed in the ink, would tend to clogg the extremely fine nozzles of the printhead.

It might be considered to use a mold made of materials such as silicon rubber to which the molten ink does not tend to adhere. However, these materials also become diluted in the molten ink to some extent and therefore do not resolve the problem of ink contamination.

It is an object of the invention to provide a method for manufacturing pellets of hot-melt ink, in which even when the ink material tends to adhere the walls of the mold cavity, the pellets can reliably and reproducibly be withdrawn from the mold.

This object is achieved by a method as specified in claim 1.

According to the invention, the ink is shock-cooled with a cooling rate that results in a shrinkage sufficient to cause the solidifying ink to separate from at least one of the mold dies.

Although, as has been stated above, the amount of shrinkage of hot-melt inks is comparatively low, such inks show a certain shrinkage effect when they are solidified. It has been found that, for the commonly used hot-melt ink compositions, the amount of shrinkage depends on the cooling rate with which the ink is solidified. When cooled more rapidly, the solidifying ink tends to form fewer but larger crystal grains, and this results in a crystal structure in which the solidified ink has a higher density and, hence, experiences a larger shrinkage. It has been found that this shrinkage effect can be utilized for facilitating the removal of the ink pellets from the mold. When the molten ink is poured into the mold cavity, the heat of the ink is dissipated through the walls of the mold, and the solidification process starts at the internal walls of the mold cavity and then proceeds towards the interior of the pellet. Thus, one might expect that the ink could tend to adhere more firmly the walls of the mold cavity when the temperature of the mold is significantly lower than that of the ink. It has been found however that the shrinkage effect mentioned above leads to a relatively uniform contraction of the pellet as a whole rather than to the formation of voids in the interior of the pellet. Thus, the contraction of the pellet solidifying in the mold cavity forces the outer layer of the ink material to be withdrawn and separated from the wall surface of the mold. As a result, the removal of the pellet from the mold can be facilitated by appropriately controlling the amount of shrinkage, i.e. by appropriately adjusting the cooling rate at which the solidification process takes place. This implies a relatively fast cooling process which is called "shock-cooling" in the present application.

In general, increasing the cooling rate will have the effect that the pellets are more readily and more reliably removed from the mold. It should be avoided however to use extremely high cooling rates which would lead to an amorphous solidification of the ink. For certain compositions of hot-melt ink, a too high cooling rate may also lead to high thermal stresses in the ink material, so that the risk of damage to the ink pellets increases. In addition, a high cooling rate will normally require a more powerful cooling equipment and lead to an increased power consumption. The cooling rate that is optimal in view of these considerations depends on the specific composition of the hot-melt ink and may be determined by experiment. Typical hot melt inks are known inter alia from European patent applications EP 0 856 565, EP 0 978 548, EP 1 067 157.

More specific features of the invention are indicated in the dependent claims.

Shock-cooling in the meaning of the invention can conveniently be achieved by placing the molds with the molten ink filled therein in an environment, e.g. a cooling chamber, which is kept at a suitably low temperature. The temperature in this chamber, which may for example be in the range from +30°C to -30°C, and may be smaller than 10°C, preferably smaller than 0°C, for example about -10°C, depending on the type of ink, will then determine the cooling rate.

More preferably, the mold is placed in the cooling chamber before the molten ink is filled in. Then, the walls of the mold will already be cool down to approximately the temperature of the cooling chamber before the molten ink is filled in, and the heat of the molten ink will then be rapidly absorbed by the walls of the mold. In this context, it is also preferable if the mold if made of a material, e.g. metal, which has a high heat conductivity and a high heat capacity. In order to increase the heat capacity of the mold and hence the cooling rate, a mold having relatively thick walls may be advantageous.

As is generally known in the art, the mold may consist of a lower die and an upper die, with a runner hole being formed in the upper die. In order to remove the pellet from the mold, the mold dies may then be separated from one another in vertical direction. If the mold cavity is spherical, for example, it is frequently observed that the pellet tends to stick to the upper die after the mold has been opened. The reason is that a small amount of ink remaining in the runner hole experiences only a small shrinkage effect and therefore adheres to the upper die, so that whole pellet is attached to the upper die. This effect may be eliminated by carefully controlling the amount of ink poured into the mold cavity. On the other hand, this effect may also be used for positively assuring that the pellets stick to the upper die. Then, the pellets may be separated from the upper die by vibrating this die or by injecting compressed air or inserting an ejector pin through the runner hole. Then, the pellets will simply drop out of the upper die and can easily be collected and discharged through a chute or the like.

Preferred embodiments of the invention will now be described in conjunction with accompanying drawings, in which:
- Fig. 1: illustrates a continuous process for molding hot-melt ink pellets and removing them from the mold cavity; and
- Fig. 2: is a sectional view of a multiple mold useable for a molding process according to a modified embodiment of the invention.

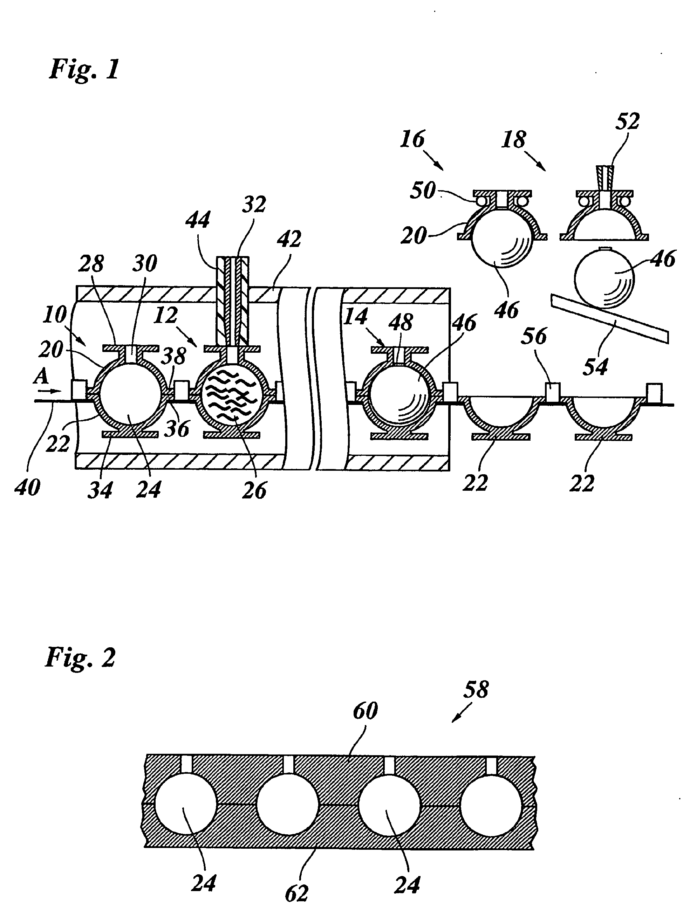

Figure 1 shows a number molds 10, 12, 14, 16, 18 each of which comprises an upper die 20 and a lower die 22 which each have a semi-spherical cup shape and, together, define a mold cavity 24 which is filled with molten hot-melt ink 26. The upper die 20 is integrally formed with a top flange 28 and has a runner hole 30 formed in the centre of the flange 28, so that molten ink can be poured into the mold cavity 26 through a nozzle 32.

The lower die 22 is essentially mirror-symmetric relative to the upper die 20 and has a bottom 34 formed integrally therewith. The lower edge of the upper die 20 and the upper edge of the lower die 22 are surrounded by circumferential flanges 36, 38 which are held in firm engagement with one another in order to sealingly close the mold cavity 24.

The lower dies 22 of the molds are inserted into receiving openings of a belt-type conveyer 40 which supports the flanges 36 of the lower dies 22. The conveyer 40 feeds the molds 10-14 intermittently in the direction of the arrow A through an elongated, tunnel-like cooling chamber 42 only parts of which are shown in figure 1. The cooling chamber 42 has thermally insulating walls, and the interior of this cooling chamber is kept at a constant temperature of e.g. -10°C by any suitable type of cooling means which are well known in the art and not described here.

The molds 10-18 are made of metal, e.g. aluminum or any other material having a high heat conductivity and have relatively thin walls. Thus, while the mold 10 is conveyed through the cooling chamber 42 towards the position of the nozzle 32, it will already be cooled down to the temperature of the cooling chamber. When the mold stops at the position of the nozzle 32, as the mold 12 in figure 1, the nozzle 32 is connected to the runner hole 30, and the molten ink 26 is filled into the mold cavity. The nozzle 32 is surrounded by a thermally insulating sheath 44 in order to prevent the molten ink from solidifying prematurely in the nozzle 32.

When the mold cavity 24 has been filled completely, the nozzle 32 is slightly lifted off from the top flange 28 of the mold, and the conveyer 40 moves one step further so as to bring the next mold 10 into the position of the nozzle 32, whereupon the filling process is repeated.

While the molds filled with molten ink are intermittently conveyed through the part of the cooling chamber 42 downstream of the nozzle 32, as the mold 14 in figure 1, the heat of the ink is rapidly dissipated through the thin walls of the mold, so that the ink is shock-cooled and solidifies in the mold cavity so as to form a spherical ink pellet 36. The cooling rate at which the ink solidifies is sufficiently high to cause a significant shrinkage of the ink material. Due to this shrinkage, the outer circumferential surface of the ink pellet 36 is separated from the internal walls of the mold cavity.

As has been shown for the mold 14 in figure 1, the mold cavity is filled to such an extent that a small plug 48 of ink is formed in the runner hole 30 of the mold. Since this plug 48 undergoes only little shrinkage, it adheres to the walls of the runner hole, so that the ink pellet 46 remains slightly attached to the top portion of the upper die 20.

When the ink pellet 46 has solidified completely, the mold leaves the cooling chamber 42. Then, as has been shown for the molds 16 and 18, the upper die 20 is grasped by a lifting conveyer 50 and is lifted away from the lower die 24 together with the ink pellet 46. In order to fully remove the ink pellet from mold 18, a nozzle 52 is placed onto the runner hole 30, and the ink pellet 46 is ejected with compressed air. The ink pellet dropping out of the upper die 20 is then collected and discharged through a chute 54.

Instead of blowing compressed air through the runner hole of the upper die 20, it would also be possible to slightly vibrate the upper die in order to remove the ink pellet 46 therefrom.

The lower dies 24 and the upper dies 20 are then returned to the upstream side of the cooling chamber 42, and the molds are closed again before they enter again into the cooling chamber 42.

In the example shown, the conveyer 40 has lugs 56 which help to hold the upper dies 20 in alignment with the lower dies 24. If the conveyer 40 is an endless belt and is trained over guide rollers (not shown) which support only the lateral side portions of the belt, the lower dies 24 may be fixed to the belt. In this case, the lower dies 24 will be reversed when they are returned to the upstream side of the cooling chamber 42, and in case that an ink pellet should have remained in the lower die 24, it would simply drop out and could also be collected. In case that an ink pellet should slightly stick to the lower die 24, vibrating means or similar mechanical means may be provided for removing the pellet from the lower die.

It should be observed that the size of the plug 48 has been exaggerated in figure 1 for illustration purposes. Likewise, the amount of shrinkage of the ink pellet 46 relative to the mold cavity 26 has been exaggerated. In practice, the shrinkage may amount to approximately 1-3% in volume.

It will be understood that the method described above is only one example for illustrating the principles of the invention and may be modified in various ways. For example, instead of passing the molds 10-18 through a cooling chamber 42, it would also be possible to blow cold air against the molds or to immerse them into a cooling liquid in order to achieve a sufficient cooling rate.

Instead of a continuous manufacturing process, it is also possible to employ a batch process. Then, it is preferable to use a multiple mold 58 an example of which has been shown in figure 2. The mold 58 has block-like upper and lower dies 60, 62 which, together, define a plurality of mold cavities 24. Since the metal blocks forming the upper and lower dies 60, 62 have a large heat capacity, a shock-cooling effect can be achieved simply be pre-cooling the mold 58 to a suitable temperature before the molten ink is filled into the mold cavities.

Instead of a metal mold, it is also possible to use a mold made of synthetic resin, especially in case of a thin-walled mold as shown in figure 1.

## Claims

1. Method for manufacturing pellets (46) of hot-melt ink which solidifies with a cooling rate-dependent shrinkage, comprising the steps of:
(a) filling molten ink (26) into a mold (10, 12, 14, 16, 18; 58) comprising two mold dies (20, 22; 60, 62),
(b) allowing the ink to cool down and to solidify in the mold, and
(c) opening the mold and removing the ink pellet (46) therefrom,
charactertized in that, in step (b), the ink is shock-cooled with a cooling rate that results in a shrinkage that causes the solidifying ink to separate from at least one of the mold dies (20, 22; 60, 62).

2. Method according to claim 1, wherein step (b) is performed by placing the mold in an environment (42) that is kept at a predetermined temperature.

3. Method according to claim 1 or 2, wherein the mold (10, 12, 14, 16, 18; 58) is cooled to a predetermined temperature before the molten ink (26) is filled in.

4. Method according to claim 2 or 3, wherein said predetermined temperature is smaller than room temperature.

5. Method according to claim 4, wherein said predetermined temperature is smaller than 10°C, preferably smaller than 0°C.

6. Method according to any of the preceding claims, wherein said mold dies (20, 22; 60, 62) are made of metal.

7. Method according to any of the preceding claims, wherein said mold dies (60, 62) are blocks made of a material having a heat conductivity and a heat capacity which are as high as the heat conductivity and the heat capacity of a metal.

8. Method according to claim 7, wherein said mold dies (60, 62) form a multiple mold (58) having a plurality of mold cavities (24).

9. Method according to any of the preceding claims, wherein said mold (10, 12, 14, 16, 18; 58) has an upper die (20; 60) and a lower die (22, 62), a runner hole (30) is formed in the upper die (20; 60), and molten ink (26) is filled into the mold to such a level that a plug (48) of ink formed in the runner hole (30) attaches the ink pellet (46) to the upper die (20, 60).

10. Method according to claim 9, wherein the ink pellet (46) is ejected from the upper die (20; 60) by means of an ejector nozzle (52) or pin acting upon the ink pellet (46) through the runner hole (30).

## Patentansprüche

1. Verfahren zur Herstellung von Pellets (46) aus Heißschmelztinte, die mit einer abkühlungsgeschwindigkeitsabhängigen Schrumpfung erstarrt, aufweisend die Schritte:
(a) Einfüllen geschmolzener Tinte (26) in eine Form (10, 12, 14, 16, 18; 58), die zwei Formelemente (20, 22; 60, 62) aufweist,
(b) Erlauben, daß die Tinte abkühlt und in der Form erstarrt, und
(c) Öffnen der Form und Entfernen des Tintenpellets (46) daraus,
**dadurch gekennzeichnet, daß** in dem Schritt (b) die Tinte schockgekühlt wird mit einer Abkühlungsgeschwindigkeit, die zu einer Schrumpfung führt, welche verursacht, daß die erstarrende Tinte sich von wenigstens einem der Formelemente (20, 22; 60, 62) löst.

2. Verfahren nach Anspruch 1, bei dem Schritt (b) durchgeführt wird, indem die Form in einer Umgebung (42) platziert wird, die bei einer vorbestimmten Temperatur gehalten wird.

3. Verfahren nach Anspruch 1 oder 2, bei dem die Form (10, 12, 14, 16, 18; 58) auf eine vorbestimmte Temperatur abgekühlt wird, bevor die geschmolzene Tinte (26) eingefüllt wird.

4. Verfahren nach Anspruch 2 oder 3, bei dem die besagte vorbestimmte Temperatur niedriger ist als die Raumtemperatur.

5. Verfahren nach Anspruch 4, bei dem die besagte vorbestimmte Temperatur geringer als 10°C ist, vorzugsweise geringer als 0°C.

6. Verfahren nach einem der vorstehenden Ansprüche, bei dem die besagten Formelemente (20, 22; 60, 62) aus Metall hergestellt sind.

7. Verfahren nach einem der vorstehenden Ansprüche, bei dem die besagten Formelemente (60, 62) Blöcke aus einem Material sind, welches eine Wärmeleitfähigkeit und eine Wärmekapazität hat, die so hoch sind wie die Wärmeleitfähigkeit und die Wärmekapazität eines Metalls.

8. Verfahren nach Anspruch 7, bei dem die besagten Formelemente (60, 62) eine Mehrfachform (58) bilden, die eine Mehrzahl von Formhohlräumen (24) hat.

9. Verfahren nach einem der vorstehenden Ansprüche, bei dem die besagte Form (10, 12, 14, 16, 18; 58) ein oberes Formelement (20; 60) und ein unteres Formelement (22, 62) hat, ein Angu131och (30) in dem oberen Formelement (20; 60) gebildet ist, und geschmolzene Tinte (26) in die Form bis zu einer solchen Höhe eingefüllt wird, daß ein in dem Angußloch (30) gebildeter Tintenpfropf (48) das Tintenpellet (46) an dem oberen Formelement (20, 60) befestigt.

10. Verfahren nach Anspruch 9, bei dem das Tintenpellet (46) aus dem oberen Formelement (20; 60) ausgeworfen wird mittels einer Auswerferdüse (52) oder einem Auswerferstift, die/der durch das Angußloch (30) auf das Tintenpellet (46) wirkt.

## Revendications

1. Procédé de fabrication de pastilles (46) d'encre thermofusible qui se solidifie en opérant une contraction qui est fonction de la vitesse de refroidissement, ledit procédé comprenant les étapes suivantes :
(a) remplir un moule (10, 12, 14, 16, 18 ; 58) comprenant deux matrices de moule (20, 22 ; 60, 62) d'encre fondue (26),
(b) laisser refroidir l'encre et se solidifier dans le moule, et
(c) ouvrir le moule et en retirer la pastille d'encre (46),
**caractérisé en ce que**, dans l'étape (b), l'encre est refroidie par choc thermique à une vitesse de refroidissement créant une contraction qui fait que l'encre se solidifiant se détache d'au moins l'une des matrices du moule (20, 22 ; 60, 62).

2. Procédé selon la revendication 1, dans lequel l'étape (b) est mise en oeuvre en plaçant le moule dans un environnement (42) maintenu à une température prédéterminée.

3. Procédé selon la revendication 1 ou 2, dans lequel le moule (10, 12, 14, 16, 18 ; 58) est refroidi à une température prédéterminée avant que l'encre fondue (26) n'y soit introduite.

4. Procédé selon la revendication 2 ou 3, dans lequel ladite température prédéterminée est inférieure à la température ambiante.

5. Procédé selon la revendication 4, dans lequel ladite température prédéterminée est inférieure à 10°C, de préférence inférieure à 0°C.

6. Procédé selon l'une quelconque des revendications précédentes, dans lequel lesdites matrices de moule (20, 22 ; 60, 62) sont en métal.

7. Procédé selon l'une quelconque des revendications précédentes, dans lequel lesdites matrices de moule (60, 62) sont des blocs constitués d'un matériau ayant une conductivité thermique et une capacité calorifique aussi élevées que la conductivité thermique et la capacité calorifique d'un métal.

8. Procédé selon la revendication 7, dans lequel lesdites matrices de moule (60, 62) forment un moule multiple (58) comprenant une pluralité de cavités de moule (24).

9. Procédé selon l'une quelconque des revendications précédentes, dans lequel ledit moule (10, 12, 14, 16, 18 ; 58) comporte une matrice supérieure (20 ; 60) et une matrice inférieure (22, 62), un trou de canal de coulée (30) est formé dans la matrice supérieure (20 ; 60) et le moule est rempli d'encre fondue (26) jusqu'à un niveau tel qu'un bouchon (48) d'encre formé dans le trou du canal de coulée (30) accroche la pastille d'encre (46) à la matrice supérieure (20, 60).

10. Procédé selon la revendication 9, dans lequel la pastille d'encre (46) est éjectée de la matrice supérieure (20 ; 60) au moyen d'une buse d'éjection (52) ou d'une broche d'éjection agissant sur la pastille d'encre (46) par le trou du canal de coulée (30).
